# EUROPEAN PATENT APPLICATION

(11) **EP 4 422 237 A1**
(43) Date of publication of application: **28.08.2024**
(21) Application number: 22894526.7
(22) Date of filing: 13.10.2022
(51) Int. Cl.: H04W 12/08

(54) **COMMUNICATION METHOD AND APPARATUS, AND DEVICE**

(30) Priority: 22.11.2021 CN 202111385460
(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN); ZHAO, Mingyu, Shenzhen, Guangdong 518129 (CN); YAN, Xueqiang, Shenzhen, Guangdong 518129 (CN); WANG, Yang, Shenzhen, Guangdong 518129 (CN)
(74) Representative: Gill Jennings & Every LLP
(86) International application number: PCT/CN2022/125094
(87) International publication number: WO 2023/087988

(57) **Abstract**

This application discloses a communication method, apparatus, and device, so that a terminal device communicates with a core network function that provides a dedicated service for the terminal device. The method includes: After obtaining a first identifier of the terminal device, the terminal device may communicate, based on the first identifier, with a first core network function indicated by a first indication in the first identifier. The first identifier includes the first indication, and a second indication and/or a third indication, the first indication indicates the first core network function that provides a dedicated service for the terminal device, the second indication indicates a first access function connected to the first core network function, and the third indication indicates a first control function that manages the first core network function. In this way, the terminal device may communicate, based on the first identifier, with the first core network function that provides the dedicated service for the terminal device.

## Description

### CROSS-REFERENCE TO RELATED APPLICATIONS

This application claims priority to Chinese Patent Application No. 202111385460.7, filed with the China National Intellectual Property Administration on November 22, 2021 and entitled "COMMUNICATION METHOD, APPARATUS, AND DEVICE", which is incorporated herein by reference in its entirety.

### TECHNICAL FIELD

This application relates to the field of communication technologies, and in particular, to a communication method, apparatus, and device.

### BACKGROUND

With development of a mobile communication system, a requirement on communication quality is increasingly high. The mobile communication system introduces an architecture (for example, a user-centric network (User-centric Network, UCN) architecture) that provides a dedicated service for a terminal device. The architecture may include a plurality of functions that provide dedicated services for the terminal device. The architecture serves the terminal device, so that communication quality of the terminal device can be improved, thereby improving user experience.

The architecture includes a core network function that provides a dedicated service for the terminal device. The core network function may be an entity, or may be a dynamically created network resource.

Currently, a method in which the terminal device communicates with the core network function that provides the dedicated service for the terminal device is needed.

### SUMMARY

Embodiments of this application provide a communication method, apparatus, and device, so that a terminal device communicates with a core network function that provides a dedicated service for the terminal device.

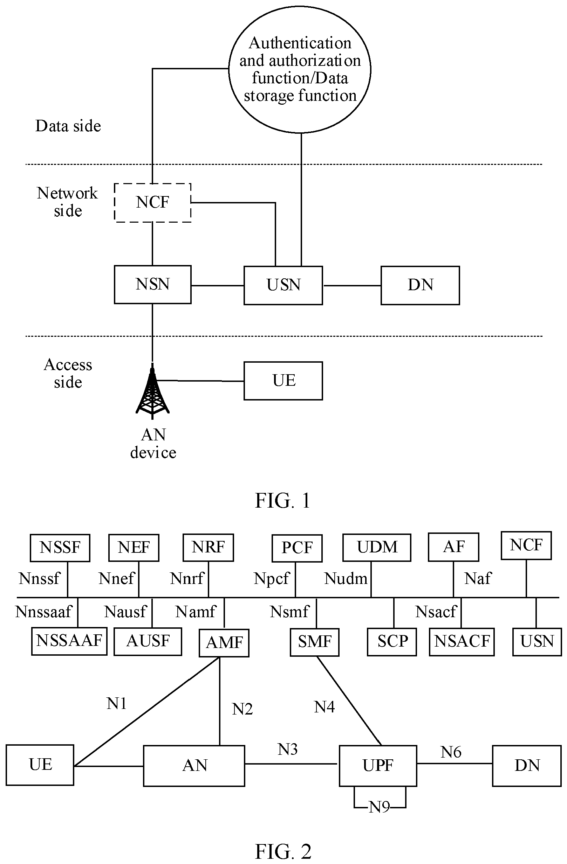

According to a first aspect, an embodiment of this application provides a communication method. The method is applicable to a communication system shown in FIG. 1 or FIG. 2. The method includes the following steps.

After obtaining a first identifier of a terminal device, the terminal device may communicate, based on the first identifier, with a first core network function that provides a dedicated service for the terminal device. The first identifier includes a first indication, and a second indication and/or a third indication, the first indication indicates the first core network function that provides the dedicated service for the terminal device, the second indication indicates a first access function connected to the first core network function, and the third indication indicates a first control function that manages the first core network function.

In the method, the terminal device may communicate, based on the first identifier, with the first core network function that provides the dedicated service for the terminal device.

In a possible design, the terminal device may communicate, via the first access function indicated by the second indication and/or the first control function indicated by the third indication, with the first core network function indicated by the first indication.

For example, the first access function and/or the first control function forward/forwards a message from the terminal device to the first core network function, to implement communication between the terminal device and the first core network function.

In this design, the terminal device may find the first core network function via the first access function and/or the first control function, to communicate with the first core network function.

In a possible design, after communicating with the first core network function based on the first identifier, the terminal device may determine, based on a stored correspondence between the first identifier and a second identifier of the terminal device, the second identifier corresponding to the first identifier; and communicate with an access and mobility management network element based on the second identifier. The second identifier includes information indicating the access and mobility management network element.

In this design, after accessing a first mobile communication system (for example, a UCN), the terminal device may determine, based on the first identifier of the terminal device in the first mobile communication system, the second identifier of the terminal device in a second mobile communication system in which the access and mobility management network element is located, to access, based on the second identifier, the second mobile communication system in which the access and mobility management network element is located.

In a possible design, after obtaining a second identifier of the terminal device, the terminal device may determine, based on a stored correspondence between the first identifier and the second identifier, the first identifier corresponding to the second identifier. The second identifier is an identifier allocated by an access and mobility management network element to the terminal device, and includes information indicating the access and mobility management network element.

In this design, after accessing a second mobile communication system in which the access and mobility management network element is located, the terminal device may determine the first identifier of the terminal device in a first mobile communication system (for example, a UCN) based on the second identifier allocated by the access and mobility management network element. In this way, the terminal device may communicate with the first core network function in the first mobile communication system based on the first identifier.

In a possible design, the terminal device may receive the first identifier from a second core network function.

For example, after the second core network function generates the first identifier, the terminal device may receive the first identifier from the second core network function.

In this design, the terminal device may conveniently obtain the first identifier of the terminal device.

In a possible design, the first identifier further includes a fourth indication, and the fourth indication indicates an identifier of the terminal device in the first core network function.

According to a second aspect, an embodiment of this application provides a communication method. The method is applicable to a communication system shown in FIG. 1 or FIG. 2. The method includes the following steps.

After generating a first identifier of a terminal device, a second core network function may communicate with the terminal device based on the first identifier. The first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function.

In the method, the second core network function may generate the first identifier of the terminal device, so that the terminal device communicates with the first core network function that provides the dedicated service for the terminal device. In this way, the second core network function provides a dedicated service for the terminal device. In addition, the first identifier may alternatively be used between core network devices, to serve the terminal device. Sensitive information (for example, an international mobile subscriber identity (international mobile subscriber identity, IMSI)/subscription permanent identifier (subscription permanent identifier, SUPI)) of the terminal device is not transmitted in a core network. This ensures security of the sensitive information of the terminal device.

In addition, the first identifier may indicate the first core network function that provides the dedicated service for the terminal device, and may also indicate a core network device connected to the first core network function. In this way, each communication device may quickly find, based on the first identifier, the core network device that serves the terminal device.

In a possible design, before generating the first identifier of the terminal device, the second core network function may obtain at least one of the first indication, the second indication, and the third indication.

Optionally, the second core network function may obtain the at least one of the first indication, the second indication, and the third indication from the first access function or the first control function.

In this design, the second core network function may conveniently obtain information needed for generating the first identifier.

In a possible design, after generating the first identifier of the terminal device, the second core network function may store a context of the terminal device corresponding to the first identifier. After receiving a first context request that carries the first identifier and that is from a first communication device, the second core network function may send, to the first communication device, the context of the terminal device corresponding to the first identifier. The first communication device is one of the following devices: the first access function, the first control function, a second access function, or a second control function, the second access function is a preset access function, and the second control function is a preset control function.

Optionally, after receiving the context of the terminal device, the first communication device sends the context of the terminal device to an access and mobility management network element.

In this design, when the terminal device accesses a second mobile communication system in which the access and mobility management network element is located, the access and mobility management network element may obtain the context of the terminal device based on the first identifier of the terminal device, to better serve the terminal device.

In a possible design, after generating the first identifier of the terminal device, the second core network function may store a context of the terminal device corresponding to the first identifier. After receiving a second context request that carries the first identifier and indicates an access and mobility management network element and that is from a first communication device, the second core network function may send, to the access and mobility management network element, the context of the terminal device corresponding to the first identifier, where the first communication device is one of the following devices: the first access function, the first control function, a second access function, or a second control function, the second access function is a preset access function, and the second control function is a preset control function.

In this design, when the terminal device accesses a second mobile communication system in which the access and mobility management network element is located, the access and mobility management network element may obtain the context of the terminal device from the second core network function based on the first identifier of the terminal device, to better serve the terminal device.

In a possible design, the first identifier further includes a fourth indication, and the fourth indication indicates an identifier of the terminal device in the first core network function.

According to a third aspect, an embodiment of this application provides a communication method. The method is applicable to a communication system shown in FIG. 1 or FIG. 2. The method includes the following steps.

After obtaining a first identifier of a terminal device, a first communication device provides a service for the terminal device based on the first identifier. The first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function. The first communication device is one of the following devices: the first access function, the first control function, a second access function, or a second control function, the second access function is a preset access function, and the second control function is a preset control function.

In the method, the first communication device may provide the service for the terminal device based on the first identifier. For example, the first communication device may find, based on the first identifier, the first core network function that provides the dedicated service for the terminal device, and forward a message from the terminal device to the first core network function, so that the terminal device communicates with the first core network function.

In a possible design, after obtaining the first identifier of the terminal device from a first message from a second communication device, the first communication device may send the first message to the first core network function indicated by the first identifier. The second communication device is one of the following devices: the terminal device, an access network AN device accessed by the terminal device, or an access and mobility management network element.

In this design, the first communication device may forward the message from the second communication device to the first core network function based on the first identifier. When the first communication device forwards the message to the first core network function, an identifier that is of the terminal device and that is carried in the message is the first identifier. In other words, the first identifier is used between core network devices, to serve the terminal device. Sensitive information (for example, an IMSI/SUPI) of the terminal device is not transmitted in a core network. This ensures security of the sensitive information of the terminal device.

In a possible design, the first communication device may obtain the first identifier of the terminal device from the first message from the second communication device, where the second communication device is one of the following devices: the terminal device, the access network AN device accessed by the terminal device, or the access and mobility management network element. Then, after obtaining, from a data management function or a data storage function, information indicating the third core network function that provides a dedicated service for the terminal device, the first communication device may send the first message to a third core network function.

Optionally, when there is no connection between the first communication device and the first core network function, the first communication device may obtain, from the data management function or the data storage function, the information indicating the third core network function that provides the dedicated service for the terminal device.

In this design, the first communication device may obtain, from the data management function or the data storage function, the information indicating the third core network function that provides the dedicated service for the terminal device, and forward the information from the second communication device to the third core network function. In this way, when there is no connection between the first communication device and the first core network function, the first communication device may alternatively forward the message from the second communication device to the third core network function, to provide a dedicated service for the terminal device.

In a possible design, the first communication device obtains the first identifier of the terminal device from the first message from the second communication device, where the second communication device is one of the following devices: the terminal device, the access network AN device accessed by the terminal device, or the access and mobility management network element. The first communication device may select or establish a fourth core network function that provides a dedicated service for the terminal device, and send the first message to the fourth core network function.

Specifically, the first communication device may select or establish, based on subscription information that is of the terminal device and that is obtained from the data management function or the data storage function, the fourth core network function that provides the dedicated service for the terminal device. Then, the first communication device may send the first message to the fourth core network function.

In this design, the first communication device may select or establish the fourth core network function that provides the dedicated service for the terminal device, and forward the information from the second communication device to the fourth core network function. In this way, when there is no connection between the first communication device and the first core network function, the first communication device may alternatively forward the message from the second communication device to the fourth core network function, to provide the dedicated service for the terminal device.

In a possible design, after obtaining the first identifier based on a third context request from the access and mobility management network element, the first communication device may perform the following operations:
after obtaining, by the first communication device from a second core network function, a context of the terminal device corresponding to the first identifier, sending the context of the terminal device to the access and mobility management network element; and/or
sending, by the first communication device, a second context request to the second core network function, where the second context request includes the first identifier and information indicating the access and mobility management network element, and the second context request is used to trigger the second core network function to send, to the access and mobility management network element, the context of the terminal device corresponding to the first identifier.

In this design, when the terminal device accesses a second mobile communication system in which the access and mobility management network element is located, the access and mobility management network element may obtain the context of the terminal device from the second core network function based on the first identifier of the terminal device, to better serve the terminal device.

In a possible design, manners of obtaining the first identifier may include the following implementations.

Implementation 1: When the third context request includes the first identifier, the first communication device may obtain the first identifier from the third context request.

Implementation 2: When the third context request includes a second identifier of the terminal device, the first communication device may determine, based on the second identifier and a stored correspondence between the first identifier and the second identifier, the first identifier corresponding to the second identifier, where the second identifier is an identifier allocated by the access and mobility management network element to the terminal device.

In this design, the first communication device may flexibly obtain the first identifier.

In a possible design, the first identifier further includes a fourth indication, and the fourth indication indicates an identifier of the terminal device in the first core network function.

According to a fourth aspect, an embodiment of this application provides a communication apparatus, including a unit configured to perform each step in any one of the foregoing aspects.

According to a fifth aspect, an embodiment of this application provides a communication device, including at least one processing element and at least one storage element, where the at least one storage element is configured to store a program and data, and the at least one processing element is configured to read and execute the program and the data that are stored in the storage element, to implement the method provided in any one of the foregoing aspects of this application.

According to a sixth aspect, an embodiment of this application provides a communication system, including a terminal device configured to perform the method provided in the first aspect, a second core network function configured to perform the method provided in the second aspect, and a first communication device configured to perform the method provided in the third aspect.

According to a seventh aspect, an embodiment of this application further provides a computer program. When the computer program is run on a computer, the computer is enabled to perform the method provided in any one of the foregoing aspects.

According to an eighth aspect, an embodiment of this application further provides a computer-readable storage medium. The computer-readable storage medium stores a computer program; and when the computer program is executed by a computer, the computer is enabled to perform the method provided in any one of the foregoing aspects.

According to a ninth aspect, an embodiment of this application further provides a chip. The chip is configured to read a computer program stored in a memory, to perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the fourth aspect to the tenth aspect, refer to descriptions of technical effects that can be achieved in any one of the possible designs of the first aspect to the third aspect. No repeated description is provided.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a flowchart of a communication method according to an embodiment of this application;
FIG. 4 is a flowchart of a second communication method according to an embodiment of this application;
FIG. 5 is a flowchart of a third communication method according to an embodiment of this application;
FIG. 6 is a flowchart of a fourth communication method according to an embodiment of this application;
FIG. 7 is a flowchart of a fifth communication method according to an embodiment of this application;
FIG. 8 is a flowchart of a sixth communication method according to an embodiment of this application;
FIG. 9 is a flowchart of a seventh communication method according to an embodiment of this application;
FIG. 10 is a diagram of a structure of a communication apparatus according to an embodiment of this application; and
FIG. 11 is a diagram of a structure of a communication device according to an embodiment of this application.

### DESCRIPTION OF EMBODIMENTS

This application provides a communication method, apparatus, and device, so that a terminal device communicates with a core network function that provides a dedicated service for the terminal device. The method, the apparatus, and the device are based on a same technical idea. Because problem resolving principles of the apparatus, the device, and the method are similar, for implementation of the apparatus, the device, and the method, refer to each other. Details of repeated parts are not described again.

In the solutions provided in embodiments of this application, after obtaining a first identifier of the terminal device, the terminal device may communicate, based on the first identifier, with a first core network function indicated by a first indication in the first identifier. The first identifier includes the first indication, and a second indication and/or a third indication, the first indication indicates the first core network function that provides a dedicated service for the terminal device, the second indication indicates a first access function connected to the first core network function, and the third indication indicates a first control function that manages the first core network function. In this way, the terminal device may communicate, based on the first identifier, with the first core network function that provides the dedicated service for the terminal device.

The following describes some terms in embodiments of this application, to facilitate understanding of a person skilled in the art.
(1) A communication device is a device that has a communication function. For example, the communication device may be but is not limited to the terminal device, an access network (access network, AN) device, an access point, or a core network (core network, CN) device.
(2) The terminal device is a device that provides voice and/or data connectivity for a user. The terminal device may also be referred to as user equipment (user equipment, UE), a mobile station (mobile station, MS), a mobile terminal (mobile terminal, MT), or the like.

For example, the terminal device may be a handheld device that has a wireless connection function, a vehicle-mounted device, or the like. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and a wireless terminal in internet of things (internet of things, IOT).

(3) The access network (access network, AN) device is a device that connects a terminal device to a wireless network in a mobile communication system, and is responsible for functions such as radio resource management, uplink and downlink data classification, quality of service (quality of service, QoS) application, signaling processing with a control plane network element, and data forwarding with a user plane network element. As a node in a radio access network, the AN device may also be referred to as a base station, a radio access network (radio access network, RAN) node (or device), an access point (access point, AP), or a network device.

Currently, some examples of the AN device are: a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a macro base station, a micro base station (that is, a small cell), a relay device, a broadband network gateway (broadband network gateway, BNG), an aggregation switch, a non-3rd generation partnership project (3rd generation partnership project, 3GPP) access device, a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point, and a world interoperability for microwave access (world interoperability for microwave access, WiMAX) base station.

In addition, in a network structure, the AN device may include a central unit (central unit, CU) node and a distributed unit (distributed unit, DU) node. In this structure, protocol layers of the AN device are split. Functions of some protocol layers are controlled by a CU in a centralized manner. Functions of some or all of remaining protocol layers are distributed in a DU, and the CU controls the DU in a centralized manner.

In this application, devices used by the terminal device to access a core network may be collectively referred to as AN devices. For example, the AN device may be an evolved universal terrestrial radio access network (evolved universal terrestrial radio access network, E-UTRAN) device in a 4^{th} generation (4^{th} generation, 4G) network or a next generation radio access network (next generation radio access network, NG-RAN) device in a 5^{th} generation (4^{th} generation, 5G) network.

(4) The CN device is a network element included in a CN part in the mobile communication system. The CN device can connect the terminal device to different data networks, and perform services such as charging, mobility management, session management, and user plane forwarding. In mobile communication systems of different standards, names of CN devices having a same function may be different. However, a specific name of a CN device having each function is not limited in embodiments of this application.

For example, in a 4^{th} generation (4^{th} generation, 4G) mobile communication (that is, long term evolution (long term evolution, LTE)) system, a network element responsible for functions such as access control, security control, and signaling coordination is a mobile management entity (Mobile management entity, MME), a network element served as a local mobility management anchor is a serving gateway (serving gateway, S-GW), a network element that is served as a handover anchor for an external data network and that is responsible for internet protocol (internet protocol, IP) address allocation is a packet data network (packet data network, PDN) gateway (PDN gateway, P-GW), a network element that stores user-related data and subscription data is a home subscriber server (home subscriber server, HSS), and a network element responsible for a policy and charging function is referred to as a policy and charging rules function (policy and charging rules function, PCRF) network element.

For another example, in a 5^{th} generation (5^{th} generation, 5G) mobile communication system, the core network may be divided into a control plane (control plane, CP) and a user plane (user plane, UP) based on specific logical function division. In the CN, network elements responsible for a control plane function may be collectively referred to as control plane network elements, and network elements responsible for a user plane function may be collectively referred to as user plane network elements. Specifically, on the user plane, a network element that is used as an interface of a data network and that is responsible for a function such as user plane data forwarding is a user plane function (user plane function, UPF) network element. On the control plane, a network element responsible for functions such as access control and mobility management may be referred to as an access and mobility management function (access and mobility management function, AMF) network element, a network element responsible for session management and control policy execution is referred to as a session management function (session management function, SMF) network element, a network element responsible for functions such as subscription data management and user access authorization is referred to as a unified data management (unified data management, UDM) network element, a network element responsible for functions such as charging and policy control is referred to as a policy control function (Policy and charging function, PCF) network element, and an application function (application function, AF) network element is responsible for transmitting a requirement of an application side for a network side.

(5) The data network (data network, DN) is a network located outside the mobile communication system, and may provide a service for a user. For example, the DN may be a packet data network (packet data network, PDN), for example, the Internet (Internet), an IP multimedia service (IP Multimedia Service, IMS) network, a data network dedicated to some applications, an Ethernet, or an IP local network. This is not limited in this application. A plurality of services may be deployed on the DN, and the DN may provide the terminal device with services such as a data service and/or a voice service. The DN may have a plurality of ASs, and each AS may provide at least one service.

(6) In this application, a first mobile communication system and a second mobile communication system may be systems using a same radio access technology (radio access technology, RAT), or may be systems using different RATs.

Optionally, the first mobile communication system is a UCN, and the second mobile communication system is the 4G mobile communication system or the 5G mobile communication system.

The 4G mobile communication system may be referred to as an evolved packet system (evolved packet system, EPS), and the 5G mobile communication system may be referred to as a 5G system (5G system, 5GS).

In embodiments of this application, unless otherwise specified, a quantity of nouns indicates "a singular noun or a plural noun", that is, "one or more". "At least one" means one or more, and "a plurality of" means two or more. The term "and/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects. For example, A/B indicates A or B. "At least one of the following items (pieces)" or a similar expression thereof refers to any combination of these items (pieces), including any combination of singular items (pieces) or plural items (pieces).

In addition, it should be understood that in descriptions of this application, terms such as "first" and "second" are merely used for distinguishing and description, but should not be understood as an indication or implication of relative importance, or should not be understood as an indication or implication of a sequence.

In addition, in embodiments of this application, "greater than" and "greater than or equal to" may be replaced with each other, and "less than or equal to" and "less than" may be replaced with each other.

The following describes, with reference to the accompanying drawings, communication systems to which embodiments of this application are applied.

FIG. 1 shows an architecture of a possible communication system to which a communication method provided in an embodiment of this application is applicable. The communication system may be a UCN. As shown in FIG. 1, the communication system may include three parts: a communication device on an access side, a communication device on a network side, and a communication device on a data side. The following describes the three parts.

The communication device on the access side may include a terminal device and an AN device. The AN device is configured to connect the terminal device to a core network function that provides a dedicated service for the terminal device.

The communication device on the network side is configured to provide various network services for the terminal device, and the network services may include a data service and a management service. The communication device on the network side may include a communication device (for example, a user service node (user service node, USN) in FIG. 1) of the core network function that provides the dedicated service for the terminal device, and a communication device (for example, a network service node (network service node, NSN) in FIG. 1) of an access function connected to the core network function. Optionally, the communication device on the network side further includes a communication device (for example, a network control function (network control function, NCF) in FIG. 1) of a control function that manages the core network function, and a DN.

The following describes the communication device on the network side by using an example in which the communication device of the core network function that provides the dedicated service for the terminal device is the USN, the communication device of the access function connected to the core network function is the NSN, and the communication device of the control function that manages the core network function is the NCF.

The USN is the core network function that provides the dedicated service for the terminal device on the network side, and may implement a function of a CN device in a 4G mobile communication system or a 5G mobile communication system.

For example, the USN may perform a control plane signaling function (for example, at least one of functions such as session management, policy management, and UE context management). For another example, the USN may perform a user plane function (for example, data forwarding, traffic statistics collection, and quality of service (quality of service, QoS) processing). For still another example, the USN may be a digital twin function of the terminal device in a core network, that is, a digital model of an actual behavior of the terminal device. Specifically, the USN may record a location and a service of the terminal device, perform artificial intelligence (artificial intelligence, AI) processing, and the like. For still another example, the USN may be a cloud server (for example, a cloud computer), and the terminal device may set (for example, setting QoS of a service and allocating bandwidth), on the cloud server, a resource provided by an operator.

Optionally, the USN includes a control plane function (USN control, USN-C) and a user plane function (USN user, USN-U). The USN-C may perform the control plane signaling function. For example, the USN-C may process control plane signaling of the terminal device, and control the USN-U via a session management function. The USN-U may perform the user plane function. For example, the USN-U may forward user plane data of the terminal device.

The USN may be a physical communication device, or may be a dynamically generated communication device dedicated to the terminal device.

The NSN is mainly responsible for performing authentication on an accessed terminal device, establishing the USN (that is, generating the USN or creating the USN), managing a life cycle of the USN, connecting the AN device and the CN device, and the like.

For example, when the terminal device initially accesses a network, the NSN may obtain subscription information of the terminal device from the communication device on the data side, and establish, based on the subscription information of the terminal device, the USN that provides the dedicated service for the terminal device. Then, the NSN may perform life cycle management on the USN corresponding to the terminal device. An example is as follows: When the USN expires, the NSN may release a resource of the USN.

During actual deployment, the NSN may be an independent communication device connected to the AN device, or may be located in a same entity as the AN device. When the NSN is the independent communication device connected to the AN device, the NSN may be extremely close to the AN device, or may be far away from the AN device.

The NCF is mainly configured to manage the USN, including establishing the USN, modifying the USN, deleting the USN, and the like.

Optionally, the NCF establishes the USN for the terminal device based on the subscription information from the communication device on the data side. Specifically, the NCF may establish, in a manner similar to that of the NSN, the USN that provides the dedicated service for the terminal device. Details are not described herein again.

The NCF may be used as a logical function, and is integrated into another network element (for example, the NSN), or may be an independent entity. When the NCF is the entity independent of the NSN, the NSN is responsible for access control (for example, responsible for access control for the terminal device to access the USN), and the NCF is responsible for managing the life cycle of the USN.

The DN may provide a service for the terminal device. For example, after receiving a request for providing the service for the terminal device, the DN may send data to the terminal device.

The communication device on the data side is configured to: provide information needed for authentication of the terminal device, and store a context, the subscription information, and the like that are of the terminal device. The communication device on the data side may include at least one of the following: an authentication and authorization function, a data management function (for example, a UDM), and a data storage function (for example, a unified data repository (unified data repository, UDR)).

Optionally, the communication device on the data side may include a data front-end (which is also referred to as data management or data processing) function and a data back-end (which is also referred to as data storage) function. The data front-end function may be the UDM, and the data back-end function may be the UDR. The data front-end function and the data back-end function may be located in one communication device, or may be located in different communication devices. This is not limited in this application. For example, the UDR may use a centralized storage manner (for example, storing, based on a symbol interval, data corresponding to an identifier of the terminal device), or may use a distributed storage manner (for example, storing data of the terminal device based on a distributed hash table or point-to-point (point to point, P2P)).

In the communication system, the core network function that provides the dedicated service for the terminal device may be dynamically created. When a core network service does not need to be provided for the terminal device, a resource of the core network function that provides the dedicated service for the terminal device may be released. In this way, a quantity of core network devices can be reduced, and a scale of the core network devices can be reduced.

It should be understood that the NSN, the USN, and the NCF may have other names, or may be other communication devices having same functions. This is not limited in this application. For example, the NSN may be an access control function, the NCF may be a network resource control or management function, and the USN may be a terminal digital twin function.

FIG. 2 shows an architecture of another possible communication system to which a communication method provided in an embodiment of this application is applicable. As shown in FIG. 2, the communication system includes three parts: a terminal device (UE is used as an example for description in the figure), a mobile communication system, and a DN. The mobile communication system provides an access service and a connection service for the terminal device.

The terminal device is an entity that can receive and transmit a radio signal on a user side, and may access the DN via the mobile communication system. For example, the terminal device may access the DN via sessions between the terminal device, an AN device, a user plane network element, and the DN. Optionally, the terminal device is used as a data collector or a relay device of another terminal device, so that these devices can perform service communication with the DN via the mobile communication system.

The mobile communication system may access at least one DN. A same DN may alternatively be accessed by at least one mobile communication system. The mobile communication system may include two parts: an AN and a CN.

A network device deployed in the AN is the AN device, and may be specifically responsible for functions such as radio access, radio resource management on an air interface side, QoS management, data compression and encryption, and user plane data forwarding.

Network elements deployed in the CN may be collectively referred to as CN devices. The following describes functions of main network elements in the CN in detail. It can be learned from the foregoing descriptions that the network elements in the CN may be classified into two types: control plane network elements and user plane network elements.

The user plane network element includes a user plane function (user plane function, UPF), and is mainly responsible for service data packet forwarding, QoS control, charging information statistics collection, and the like.

The control plane network element is mainly responsible for service procedure interaction, and delivering a data packet forwarding policy, a QoS control policy, and the like to a user plane. The control plane network elements mainly include an AMF, an SMF, a PCF, an AF, an authentication server function (authentication server function, AUSF), a network slice selection function (network slice selection function, NSSF), a service communication proxy (service communication proxy, SCP), a network slice admission control function (network slice admission control function, NSACF), a UCN, an NCF, a network slice-specific authentication and authorization function (network slice-specific authentication and authorization function, NSSAAF), a network exposure function (network exposure function, NEF), a network function repository function (network function (network function, NF) repository function, NRF), a UDM, and a UDR (not shown in the figure).

The following describes the communication devices in the control plane network elements. For the UCN and the UCF, refer to the descriptions in FIG. 1. Details are not described herein again.

The AMF is mainly responsible for access management and mobility management of the terminal device, for example, is responsible for status maintenance of the terminal device, reachability management of the terminal device, location update of the terminal device, network registration of the terminal device, handover of the terminal device, and forwarding of a non-mobility management (mobility management, MM) non-access stratum (non-access-stratum, NAS) message.

The SMF is mainly responsible for session management of the terminal device, for example, managing establishment, modification, and release of a protocol data unit (protocol data unit, PDU) session, allocating an internet protocol (internet protocol, IP) address to the terminal device, selecting a UPF that provides a service data packet forwarding function, and maintaining a PDU session context.

The PCF is mainly responsible for policy control, for example, generating and/or managing a user, a session, and a QoS flow processing policy, and sending a policy to the AMF and the SMF.

The AF is mainly responsible for providing various services, interacting with the PCF to perform the policy control, and the like.

The AUSF is mainly responsible for performing security authentication of the terminal device.

The NSSF is mainly responsible for selecting a network slice for the terminal device.

The SCP is mainly responsible for forwarding a message between different network elements.

The NSACF is mainly responsible for admission control of the network slice.

The NSSAAF is mainly responsible for implementing network slice-specific authentication and authorization.

The NEF is mainly responsible for providing a framework, authentication, and an interface related to network capability exposure, and transmitting information between a network function and another network function that are of the mobile communication system.

The NRF is mainly responsible for storing and selecting network functional entity information for another network element.

The UDM is mainly responsible for storing user data (for example, storing subscription information and authentication/authorization information), managing user subscription, managing a user identifier, and the like.

The UDR is mainly responsible for storing the user data (for example, storing the subscription information and the authentication/authorization information), storing application-related data, and the like.

FIG. 2 further shows interfaces between a plurality of communication devices in the communication system. N1 is an interface between the terminal device and a core network control plane. The terminal device may interact with the AMF through the N1 interface. N2 is an interface between the AN device and the core network control plane. The AN device may interact with the AMF through the N2 interface. N3 is a communication interface between an access network device and the UPF, and is configured to transmit the user data. N4 is an interface between the SMF and the UPF, and is configured to perform policy configuration and the like on the UPF. N6 is an interface between the UPF and the DN. Interfaces between control plane network elements in the CN may be implemented through corresponding service-based interfaces, as shown in FIG. 2.

It should be noted that the communication system shown in FIG. 2 does not constitute a limitation on a communication system to which embodiments of this application are applicable. Therefore, the communication method provided in an embodiment of this application is further applicable to communication systems of various standards, for example, an LTE communication system, a 5G communication system, a 6G communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communication, MTC), internet of things (internet of things, IoT), long term evolution-machine to machine (LTE-machine to machine, LTE-M), machine to machine (machine to machine, M2M), IoT, and the like. In addition, it should be further noted that names of the network elements in the communication system are not limited in embodiments of this application either. For example, in communication systems of different standards, the network elements may have other names. For another example, when a plurality of network elements are integrated into a same physical device, the physical device may have another name.

The following describes the solutions provided in this application with reference to the accompanying drawings.

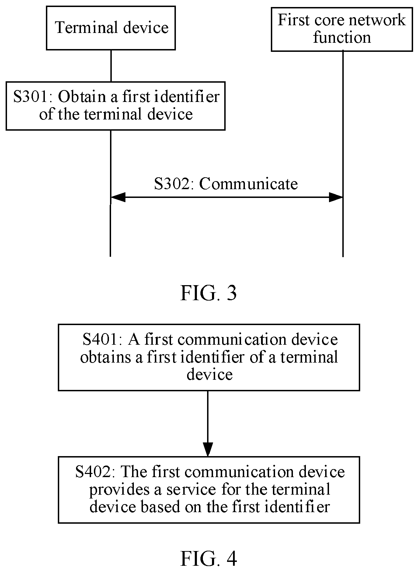

An embodiment of this application provides a communication method. The method may be applied to the communication system shown in FIG. 1 or FIG. 2. In the method, a terminal device may communicate, based on a first identifier, with a core network function that provides a dedicated service for the terminal device. The following describes a procedure of the method in detail with reference to a flowchart shown in FIG. 3.

S301: The terminal device obtains the first identifier of the terminal device.

The first identifier may include a first indication, and a second indication and/or a third indication, the first indication indicates a first core network function that provides a dedicated service for the terminal device, the second indication indicates a first access function connected to the first core network function, and the third indication indicates a first control function that manages the first core network function.

Optionally, the first indication includes at least one of the following: an identifier of the first core network function and address information (for example, an IP address) of the first core network function. The second indication includes at least one of the following: an identifier of the first access function and address information (for example, an IP address) of the first access function. The third indication includes at least one of the following: an identifier of the first control function and address information (for example, an IP address) of the first control function.

The first core network function may be the USN in the communication system shown in FIG. 1 or FIG. 2, the first access function may be the NSN in the communication system shown in FIG. 1, and the first control function may be the NCF in the communication system shown in FIG. 1 or FIG. 2.

Optionally, the first identifier further includes a fourth indication; and the fourth indication indicates an identifier of the terminal device in the first core network function, and may be used to distinguish between different terminal devices in the first core network function. For example, the fourth indication may be the identifier of the terminal device in the first core network function.

S302: The terminal device communicates, based on the first identifier, with the first core network function indicated by the first indication in the first identifier.

Optionally, the terminal device may communicate, via the first access function indicated by the second indication and/or the first control function indicated by the third indication, with the first core network function indicated by the first indication.

For example, when there is a connection between the first access function and the first core network function, a message sent by the terminal device to the first core network function may be forwarded via the first access function.

For another example, when there is no connection between the first access function and the first core network function, but there is a connection between the first control function and the first core network function, a message sent by the terminal device to the first core network function may be forwarded via the first access function and the first control function.

For still another example, when there is a connection between the first control function and the first core network function, a message sent by the terminal device to the first core network function may be forwarded via the first control function.

According to the method provided in the foregoing method embodiment, after obtaining the first identifier of the terminal device, the terminal device may communicate, based on the first identifier, with the first core network function that provides the dedicated service for the terminal device. The first identifier includes the first indication, and the second indication and/or the third indication, the first indication indicates the first core network function that provides the dedicated service for the terminal device, the second indication indicates the first access function connected to the first core network function, and the third indication indicates the first control function that manages the first core network function. In this way, the terminal device may communicate, based on the first identifier, with the first core network function indicated by the first identifier.

In the embodiment shown in FIG. 3, step S301 may be implemented in, but is not limited to, the following manners.

Manner 1: The terminal device receives the first identifier from a second core network function. Correspondingly, the second core network function sends the first identifier to the terminal device.

The second core network function may be one of the following: the first core network function, a data management function (for example, a UDM), or a data storage function (for example, a UDR).

Optionally, the terminal device receives the first identifier from the second core network function in the following scenarios:
1. in a process in which the terminal device accesses a first mobile communication system (for example, a UCN); and
2. in a process in which the terminal device interacts with the first mobile communication system (for example, the UCN).

Optionally, the first identifier is carried in an existing message, or is carried in a new message.

In the manner 1, the terminal device may conveniently obtain the first identifier that can indicate the first core network function, to communicate with the first core network function.

Optionally, in an implementation scenario of the embodiment shown in FIG. 3, before that the terminal device receives the first identifier from the second core network function in the manner 1, the method further includes the following step.

A1: The second core network function generates the first identifier.

The second core network function may generate the first identifier in the following scenarios:
1. in a process in which the terminal device accesses the first mobile communication system (for example, the UCN), for example, the second core network function receives a connection establishment request or a registration request from the terminal device; and
2. when selecting or establishing the core network function (namely, the first core network function) that provides the dedicated service for the terminal device.

Optionally, before generating the first identifier, the second core network function may obtain at least one of the first indication, the second indication, and the third indication.

In a possible implementation, the second core network function obtains the at least one of the first indication, the second indication, and the third indication from the first access function or the first control function.

The at least one of the first indication, the second indication, and the third indication may be carried in the existing message, or may be carried in the new message.

The following describes an occasion at which the second core network function obtains the at least one of the first indication, the second indication, and the third indication.

Optionally, after determining that the first identifier is to be generated, the second core network function obtains the at least one of the first indication, the second indication, and the third indication from the first access function or the first control function. For example, after receiving a message used to trigger the second core network function to generate the first identifier, the second core network function obtains the at least one of the first indication, the second indication, and the third indication from the first access function or the first control function.

Optionally, the second core network function obtains the at least one of the first indication, the second indication, and the third indication from the message that is from the first access function or the first control function and that is used to trigger generation of the first identifier.

The following describes how the second core network function obtains at least one of the first indication and the third indication from the first access function.

Optionally, when the first identifier includes the first indication, the first access function sends a locally stored first indication to the second core network function; or the first access function forwards the first indication from the first core network function to the second core network function.

Optionally, when the first identifier includes the third indication, the first access function sends a locally stored third indication to the second core network function; or the first access function forwards the third indication from the first control function to the second core network function.

The following describes how the second core network function obtains at least one of the first indication and the second indication from the first control function.

Optionally, when the first identifier includes the first indication, the first control function sends a locally stored first indication to the second core network function; or the first control function may forward the first indication from the first access function to the second core network function.

Optionally, when the first identifier includes the third indication, the first control function sends a locally stored second indication to the second core network function; or the first control function may forward the second indication from the first access function to the second core network function.

It should be understood that content of information obtained by the second core network function matches the first identifier. For example, when the first identifier includes the first indication and the second indication, the second core network function may obtain the first indication and the second indication. In this case, the second core network function may not obtain the third indication.

In the method, the second core network function may flexibly obtain the at least one of the first indication, the second indication, and the third indication, to generate the first identifier.

Optionally, after generating the first identifier, the second core network function communicates with the terminal device based on the first identifier.

For example, when the second core network function is the first core network function, the second core network function may provide a user plane service for the terminal device based on the first identifier. Specifically, the second core network function may send, to the terminal device, a data packet including the first identifier.

For another example, when the second core network function is the data management function or the data storage function, the second core network function may receive a request for the terminal device, and obtain subscription information of the terminal device based on the first identifier in the request. The request for the terminal device may be used to request to register the terminal device with a network. The request for the terminal device may be sent by an access function (for example, the NSN) to the second core network function after receiving a request message (for example, a registration request or a connection establishment request) from the terminal device.

In the method, the second core network function may generate the first identifier of the terminal device, so that the terminal device communicates with the first core network function that provides the dedicated service for the terminal device. In this way, the second core network function provides a dedicated service for the terminal device.

Manner 2: After obtaining a second identifier of the terminal device, the terminal device may determine, based on a stored correspondence between the first identifier and the second identifier, the first identifier corresponding to the second identifier. In other words, after obtaining the second identifier of the terminal device, the terminal device determines that an identifier that is indicated by the correspondence and that corresponds to the second identifier is the first identifier.

The second identifier may be an identifier allocated by an access and mobility management network element to the terminal device, and includes information indicating the access and mobility management network element. The access and mobility management network element may be an AMF or an MME. The information indicating the access and mobility management network element may include at least one of the following: an identifier of the access and mobility management network element and address information (for example, an IP address) of the access and mobility management network element.

The correspondence between the first identifier and the second identifier may be pre-configured, or may be specified in a protocol, or may be sent to the terminal device after being configured by a pre-determined communication device. A representation form of the correspondence between the first identifier and the second identifier may be a list or a correspondence between characters (segments).

Optionally, the manner 2 is applicable to the following scenarios:
1. The terminal device has accessed a second mobile communication system (for example, a 4G or 5G mobile communication system) in which the access and mobility management network element is located, and the terminal device is to access a first mobile communication system (for example, a UCN).
2. The terminal device has left the second mobile communication system in which the access and mobility management network element is located, and the terminal device is to access the first mobile communication system.

In the manner 2, the terminal device may communicate, based on the first identifier corresponding to the second identifier in the second mobile communication system, with the first core network function indicated by the first identifier.

Optionally, in an implementation scenario of the foregoing embodiment, after step S302, the method further includes the following steps.

B 1: The terminal device determines, based on the stored correspondence between the first identifier and the second identifier of the terminal device, the second identifier corresponding to the first identifier. In other words, the terminal device determines that an identifier that is indicated by the correspondence and that corresponds to the first identifier is the second identifier.

The second identifier may include the information indicating the access and mobility management network element. The access and mobility management network element may be the AMF or the MME. The information indicating the access and mobility management network element may include at least one of the following: the identifier of the access and mobility management network element and the address information (for example, the IP address) of the access and mobility management network element.

For specific content of the correspondence, refer to S301. Details are not described herein again.

Optionally, B1 is performed in the following scenarios:
1. The terminal device has accessed the first mobile communication system in which the first core network function is located, and the terminal device is to access the second mobile communication system in which the mobility management network element is located.
2. The terminal device has left the first mobile communication system in which the first core network function is located, and the terminal device is to access the second mobile communication system in which the mobility management network element is located.

B2: The terminal device communicates with the access and mobility management network element based on the second identifier.

Optionally, the terminal device may send, to the access and mobility management network element, a message carrying the second identifier. The message carrying the second identifier may be a NAS message. For example, the message carrying the second identifier may be a registration request, a connection establishment request, a service request, or the like.

In the foregoing method, after communicating with the first core network function, the terminal device may communicate with the access and mobility management network element in the second mobile communication system based on the correspondence between the first identifier and the second identifier.

The following describes the solutions provided in this application with reference to the accompanying drawings.

An embodiment of this application provides a communication method. The method may be applied to the communication system shown in FIG. 1 or FIG. 2. In the method, a first communication device may provide a service for a terminal device based on a first identifier. The following describes a procedure of the method in detail with reference to a flowchart shown in FIG. 4.

S401: The first communication device obtains the first identifier of the terminal device.

The first communication device is one of the following devices: a first access function indicated by a second indication in the first identifier, a first control function indicated by a third indication in the first identifier, a second access function, or a second control function. The second access function may be a preset access function (for example, a default access function or an access function preset by an operator), and the second control function may be a preset control function (for example, a default control function or a control function preset by the operator).

For specific content of the first identifier, refer to the method provided in the embodiment shown in FIG. 3. Details are not described herein again.

Optionally, the first communication device obtains the first identifier from a message from a second communication device. The second communication device is one of the following devices: the terminal device, an AN device accessed by the terminal device, or an access and mobility management network element. The access and mobility management network element may be an AMF or an MME.

The message from the second communication device may be a NAS message, for example, a registration request, a connection establishment request, a service request, or a context request.

S402: The first communication device provides the service for the terminal device based on the first identifier.

According to the method provided in the foregoing method embodiment, the first communication device may provide the service for the terminal device based on the obtained first identifier of the terminal device.

Optionally, in an implementation scenario of the foregoing embodiment, when the first communication device obtains the first identifier of the terminal device from a first message from the second communication device in S401, the first communication device may provide the service for the terminal device in S402 in the following manners.

### Manner 1

The first communication device sends the first message to a first core network function indicated by a first indication in the first identifier.

Optionally, when there is a connection between the first communication device and the first core network function, the first communication device sends the first message to the first core network function.

In the manner 1, the second communication device may send the first message to the first core network function via the first communication device. In this way, the first core network function may provide a dedicated service for the terminal device.

### Manner 2

C1: The first communication device obtains, from a data management function (for example, a UDM) or a data storage function (for example, a UDR), information indicating a third core network function that provides a dedicated service for the terminal device.

The information indicating the third core network function that provides the dedicated service for the terminal device may include at least one of the following: an identifier of the third core network function and address information (for example, an IP address) of the third core network function.

Optionally, when there is no connection between the first communication device and a first core network function indicated by a first indication in the first identifier, the first communication device performs C1.

Step C1 may be implemented in the following manner.

The first communication device sends a first request to the data management function or the data storage function, where the first request is used to request to obtain information indicating a core network function that provides a dedicated service for the terminal device. The data management function or the data storage function sends, to the first communication device, the information indicating the core network function (namely, the third core network function) that provides the dedicated service for the terminal device.

Optionally, when there are a plurality of core network functions that provide dedicated services for the terminal device, the data management function or the data storage function may select a core network function, namely, the third core network function, in the following manners: randomly selecting a core network function; selecting a core network function (for example, selecting a core network function with minimum current load) based on a local policy; or selecting a core network function closest to the terminal device based on a location of the terminal device.

C2: The first communication device sends the first message to the third core network function.

In the manner 2, after obtaining, from the data management function or the data storage function, the information indicating the third core network function that provides the dedicated service for the terminal device, the first communication device may send the first message from the second communication device to the third core network function. In this way, when there is no connection between the first communication device and the first core network function indicated by the first indication in the first identifier, the first communication device may still provide a dedicated service for the terminal device via the third core network function.

### Manner 3

D1: The first communication device obtains subscription information of the terminal device from a data management function or a data storage function.

Optionally, when there is no connection between the first communication device and a first core network function indicated by a first indication in the first identifier, the first communication device performs D1.

The first communication device may obtain the subscription information of the terminal device from the data management function or the data storage function by using a subscription information obtaining procedure.

D2: The first communication device selects or establishes, based on the subscription information, a fourth core network function that provides a dedicated service for the terminal device.

For example, when the subscription information indicates that the terminal device subscribes to the dedicated service, the first communication device may select or establish the fourth core network function that provides the dedicated service for the terminal device.

D3: The first communication device sends the first message to the fourth core network function.

In the manner 3, after obtaining the subscription information of the terminal device from the data management function or the data storage function, the first communication device may select or establish the fourth core network function that provides the dedicated service for the terminal device, and send the first message from the second communication device to the fourth core network function. In this way, when there is no connection between the first communication device and the first core network function indicated by the first indication in the first identifier, the first communication device may still provide a dedicated service for the terminal device via the fourth core network function.

### Manner 4

G1: The first communication device obtains indication information of a core network function that provides a dedicated service for the terminal device.

The first communication device may obtain, in any one of the manner 1 to the manner 3, the indication information of the core network function that provides the dedicated service for the terminal device. Specifically, the first communication device may obtain, in the manner 1, a first indication indicating a first core network function; the first communication device may obtain, in the manner 2, indication information indicating a third core network function; or the first communication device may obtain, in the manner 3, indication information indicating a fourth core network function.

G2: The first communication device sends, to the second communication device, the indication information of the core network function that provides the dedicated service for the terminal device. Then, the second communication device may send the first message to the core network function that provides the dedicated service for the terminal device.

In the manner 4, after obtaining, based on the first identifier, the indication information of the core network function that provides the dedicated service for the terminal device, the first communication device may send, to the second communication device, the indication information of the core network function that provides the dedicated service for the terminal device. Then, the second communication device may send, based on the indication information, the first message to the core network function that provides the dedicated service for the terminal device. In this way, with assistance of the first communication device, the core network function may provide the dedicated service for the terminal device.

Optionally, in an implementation scenario of the embodiment shown in FIG. 4, the first communication device may provide the service for the terminal device in the following manners based on a first identifier in a context request from the access and mobility management network element.

### Implementation 1

In S401, the first communication device obtains the first identifier based on a third context request from the access and mobility management network element.

Optionally, the first communication device obtains the first identifier in the following manners.

Manner a: When the third context request includes the first identifier, the first communication device may obtain the first identifier from the third context request.

The first identifier may be determined by the access and mobility management network element based on a second identifier and a stored correspondence between the first identifier and the second identifier. In other words, the access and mobility management network element determines that an identifier that is indicated by the correspondence and that corresponds to the second identifier is the first identifier.

The second identifier may be an identifier allocated by the access and mobility management network element to the terminal device, and includes information indicating the access and mobility management network element. The information indicating the access and mobility management network element may include at least one of the following: an identifier of the access and mobility management network element and address information (for example, an IP address) of the access and mobility management network element.

The correspondence may be pre-configured, or may be specified in a protocol, or may be sent to the access and mobility management network element after being configured by a pre-determined communication device. A representation form of the correspondence may be a list or a correspondence between characters (segments).

Manner b: When the third context request includes a second identifier of the terminal device, the first communication device may determine, based on the second identifier and a stored correspondence between the first identifier and the second identifier, the first identifier corresponding to the second identifier. In other words, the first communication device determines that an identifier that is indicated by the correspondence and that corresponds to the second identifier is the first identifier.

For content of the second identifier, refer to the manner a. Details are not described herein again.

The correspondence may be pre-configured, or may be specified in a protocol, or may be sent to the first communication device after being configured by a pre-determined communication device. A representation form of the correspondence may be a list or a correspondence between characters (segments).

In the foregoing manner, the first communication device may flexibly obtain the first identifier of the terminal device, to request a context of the terminal device for the access and mobility management network element based on the first identifier.

In S402, after obtaining, from a second core network function, the context of the terminal device corresponding to the first identifier, the first communication device may send the context of the terminal device to the access and mobility management network element.

Specifically, after the first communication device sends, to the second core network function, a first context request carrying the first identifier, the second core network function may send, to the first communication device, the context of the terminal device corresponding to the first identifier.

The second core network function may store the context of the terminal device corresponding to the first identifier.

### Implementation 2

In S401, the first communication device obtains the first identifier based on a third context request from the access and mobility management network element. For specific content, refer to the implementation 1. Details are not described herein again.

In S402, the first communication device sends a second context request to a second core network function. The second context request includes the first identifier and information indicating the access and mobility management network element.

The second context request may be used to trigger the second core network function to send, to the access and mobility management network element, a context of the terminal device corresponding to the first identifier. In other words, after receiving the second context request, the second core network function may send, to the access and mobility management network element, the context of the terminal device corresponding to the first identifier.

Optionally, the second core network function stores the context of the terminal device corresponding to the first identifier.

The information indicating the access and mobility management network element may include at least one of the following: an identifier of the access and mobility management network element and address information (for example, an IP address) of the access and mobility management network element.

In the foregoing implementation, when the terminal device accesses a second mobile communication system in which the access and mobility management network element is located, the access and mobility management network element may obtain the context of the terminal device from the second core network function based on the first identifier of the terminal device, to better serve the terminal device.

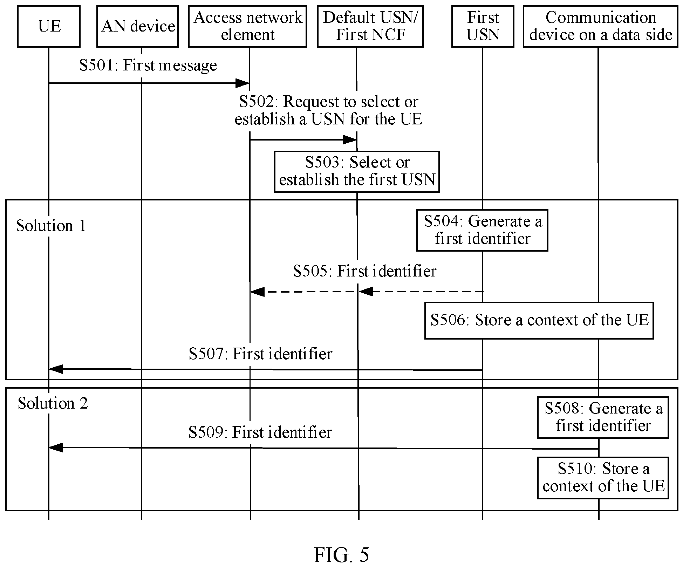

An embodiment of this application further provides a communication method. The method is applicable to the communication system shown in FIG. 1 or FIG. 2. The method includes a specific process of generating a first identifier. The following describes this embodiment of this application with reference to a flowchart shown in FIG. 5. For ease of description, the following uses an example in which a communication device of a core network function that provides a dedicated service for a terminal device is a USN, a communication device of an access function connected to the core network function is an NSN, a communication device of a control function that manages the core network function is an NCF, and the terminal device is UE for description.

S501: The UE sends a first message to an access network element. The first message is used to trigger selection or establishment of the USN for the UE.

The access network element may be the NSN or an AMF. The first message may be a NAS message. For example, the NAS message may be a registration request, a service request, a session establishment request, a USN creation request, or the like.

Optionally, the first message includes identification information of the UE. The identification information of the UE may be an identifier (for example, a native UCN-globally unique temporary identifier (UCN-globally unique temporary identifier, UCN-GUTI), that is, a Native UCN-GUTI) pre-configured by an operator for the UE, a subscription concealed identifier (subscription concealed identifier, SUCI), a permanent equipment identifier (permanent equipment identifier, PEI), or the like.

A format of the identifier (for example, the Native UCN-GUTI) pre-configured by the operator for the UE may be the same as a format of the first identifier. For the format of the first identifier, refer to the method shown in FIG. 3. Details are not described herein again.

The identifier pre-configured by the operator for the UE may be a UE identifier carried in a SIM card. When the UE obtains the SIM card from the operator and uses the SIM card for a first time, the UE may use the Native UCN-GUTI in the SIM card as the identification information of the UE.

Optionally, the UE may send the first message to the access network element via an AN device.

S502: The access network element sends, to a default USN or an NCF (namely, a first NCF), a message used to request to select or establish the USN for the UE.

The default USN may be a USN that always exists in a core network, and is configured to process UE that cannot be identified by the access network element. For example, when the access network element does not have a context of the UE, in other words, there is no binding relationship between the UE and the USN, the access network element cannot identify the UE. In this case, the access network element may send, to the default USN, the message used to request to select or establish the USN for the UE.

Optionally, the operator configures indication information (for example, an identifier of the default USN and/or an address of the default USN) of the default USN for the access network element. In this way, the access network element may send a message to the default USN based on the indication information.

The first NCF may be an independent entity, or may be a communication device integrated with an NCF function.

S502 may be implemented in the following manners.

Manner c1: The access network element may send the first message to the default USN or the first NCF.

Manner c2: After receiving the first message, the access network element may construct a message (referred to as a USN request message below for ease of differentiation) used to request to select or establish the USN for the UE, and send the USN request message to the default USN or the first NCF.

For example, when the first message is the service request or the session establishment request, if the access network element finds that no USN currently provides a service for the UE, the access network element may construct the USN request message used to request to select or establish the USN for the UE, and send the USN request message to the default USN or the first NCF.

The USN request message may include the identification information of the UE, and the identification information of the UE may be obtained by the access network element from the first message.

S503: The default USN or the first NCF obtains subscription information of the UE from a communication device (for example, a UDM or a UDR) on a data side, and selects or establishes the USN (referred to as a first USN below for ease of differentiation) for the UE based on the subscription information.

Optionally, the default USN or the first NCF may obtain the subscription information of the UE from the communication device on the data side based on the received identification information of the UE. The subscription information of the UE may be static subscription of the UE.

In some possible implementations, the default USN or the first NCF may select or establish the USN based on the subscription information of the UE. For example, when the subscription information of the UE indicates that the UE subscribes to the dedicated service, the default USN or the first NCF selects or establishes the first USN for the UE.

In other possible implementations, the default USN may send the subscription information of the UE to the first NCF. Then, the first NCF may select or establish the first USN based on the subscription information of the UE.

Optionally, after the first USN is selected or established, the default USN or the first NCF sends a correspondence between the identification information of the UE and information about the first USN to the communication device on the data side.

After the first USN is selected or established, the first USN may generate the first identifier of the UE (that is, refer to a solution 1 in FIG. 5), or the communication device on the data side may generate the first identifier of the UE (that is, refer to a solution 2 in FIG. 5).

When the first USN generates the first identifier of the UE, S504 to S507 are performed. When the communication device on the data side generates the first identifier of the UE, S508 to S510 are performed.

S504: The first USN generates the first identifier of the UE.

For content of the first identifier, refer to the method shown in FIG. 3. Details are not described herein again.

The format of the first identifier may include one of the following formats.

Format a: The first identifier may be: <UCN-GUTI>=<GUUSI><UCN-TMSI>.

The UCN-GUTIis the globally unique temporary identifier (globally unique temporary identifier, GUTI) of the UE in the UCN network.

The UCN-TMSI is a user-centric network-temporary mobile subscriber identity (user-centric network-temporary mobile subscriber identity), that is, an identifier of the UE in the first USN.

For example, <GUUSI> may be one of the following:
(1) <GLTUSI>=<MCC><MNC><USN Info.>,
(2) <GLTUSI>=<MCC><MNC><NSN Info.><USN Info.>,
(3) <GLTUSI>=<MCC><MNC><NCF Info.><USN Info.>, or
(4) <GLTUSI>=<MCC><MNC><NSN Info.><NCF Info.><USN Info.>.

The MCC is a mobile country code (mobile country code), and the MNC is a mobile network code (mobile network code).

The USN information (USN Info.) may be used as information (namely, the first indication in the method shown in FIG. 3) indicating the first USN.

The NSN information (NSN Info.) may be used as information (namely, the second indication in the method shown in FIG. 3) indicating a first NSN connected to the first USN.

The NCF information (NCF Info.) may be used as information (namely, the third indication in the method shown in FIG. 3) indicating the first NCF that manages the first USN.

For specific content and obtaining manners of the USN Info., the NSN Info., and the NCF Info., refer to the method shown in FIG. 3. Details are not described herein again.

Format b: This format of the first identifier is basically the same as the format a, except that the first identifier does not include an MCC or an MNC.

For example, in the format b, the first identifier may be one of the following:
(1) <USN-S-TMSI>=<USN Info.><UCN-TMSI>,
(2) <USN-S-TMSI>=<NSN Info.><USN Info.><UCN-TMSI>,
(3) <USN-S-TMSI>=<NCF Info.><USN Info.><UCN-TMSI>, or
(4) <USN-S-TMSI>=<NSN Info.><NCF Info.><USN Info.><UCN-TMSI>.

Optionally, the first USN may determine, depending on whether a network accessed by the UE is a home network of the UE, which format of the first identifier is to be generated. Specifically, when the network accessed by the UE is the home network of the UE (for example, a user of a first operator accesses a network of the first operator), the first USN may generate the format b of the first identifier for the UE. In this case, the first identifier may not include the MCC or the MNC. When the network accessed by the UE is not the home network of the UE, the first USN may generate the format a of the first identifier for the UE.

It should be understood that the first USN, the first NSN, and the first NCF may be located in one entity, or may be located in a plurality of entities. When at least two communication devices in the first USN, the first NSN, and the first NCF are located in a same entity, the first identifier may include only information indicating one of the at least two communication devices. For example, when the first NSN and the first NCF are located in the same entity, the first identifier may include the NSN Info. or the NCF Info., and does not need to include the NSN Info. and the NCF Info.. For another example, when the first USN, the first NSN, and the first NCF are located in the same entity, the first identifier may include the NSN Info., the NCF Info., or the USN Info.. In this case, the NSN Info., the NCF Info., or the USN Info. may all indicate the first USN, the first NSN, and the first NCF.

S505: The first USN sends the first identifier to at least one communication device in the access network element, the default USN, and the first NCF.

Optionally, the first USN sends the first identifier to the at least one communication device in the access network element, the default USN, and the first NCF based on a feedback message of the first message.

S506: The first USN generates the context of the UE, and stores the context of the UE in the communication device on the data side.

Optionally, the first USN may use the USN info. or the first identifier as a key (Key) or an index, and store the context of the UE in the communication device on the data side.

The context of the UE may be a dynamic context.

S507: The first USN sends the first identifier to the UE.

In some possible manners, the first USN may send the first identifier to the UE via the first NSN and/or the first NCF.

In some other possible manners, the first USN may directly send the first identifier to the UE via the AN device.

After receiving the first identifier, the UE may communicate with the first USN based on the first identifier. For a specific method, refer to the method shown in FIG. 3. Details are not described herein again.

S508: The communication device on the data side generates the first identifier of the UE.

For the format of the first identifier and a manner of generating the first identifier, refer to S504, and only an operation body is replaced with the communication device on the data side. Details are not described herein again.

When the communication device on the data side obtains NSN info. and/or NCF info. from the default USN or the first NCF, in S503, the default USN or the first NCF may send the NSN info. and/or the NCF info. to the communication device on the data side when obtaining the subscription information.

Optionally, after the default USN or the first NCF selects or establishes the first USN, the default USN, the first NCF, or the first USN sends, to the communication device on the data side, a request used to generate the first identifier of the UE. Then, the communication device on the data side performs S508.

Optionally, the communication device on the data side may send the first identifier as a part of the subscription information of the UE to the default USN or the first NCF.

S509: The communication device on the data side sends the first identifier to the UE.

Optionally, the communication device on the data side sends the first identifier to the UE via at least one of the following communication devices: the first USN, the first NCF, and a first NSN.

S510: The communication device on the data side uses USN info. or the first identifier as a key (Key) or an index, and stores the context of the UE corresponding to the key or the index.

In some possible implementations, the access network element may be replaced with a user plane network element (for example, a UPF). The following describes how the user plane network element interacts with the default USN or the first NCF.

Optionally, the user plane network element communicates with the default USN or the first NCF via a connection between the user plane network element and the default USN or the first NCF. For example, an interface between the user plane network element and a control plane network element is a service-based interface, and the user plane network element may obtain an address of the default USN or the first NCF via an NRF. Then the user plane network element communicates with the default USN or the first NCF based on an address of the default USN or the first NCF.

Optionally, the user plane network element communicates with the default USN or the first NCF via an SMF.

In the foregoing method, the first USN or the communication device on the data side may generate the first identifier of the UE. In this way, the first identifier may be used between core network devices to serve the UE, and an IMSI/SUPI of the UE is not transmitted inside the core network. This ensures security of sensitive information of the UE.

In addition, the first identifier may indicate a first core network function that provides a dedicated service for the UE, and may also indicate a core network device (for example, the first NCF in the foregoing method) connected to the first core network function. In this way, each communication device may quickly find, based on the first identifier, the core network device that serves the UE.

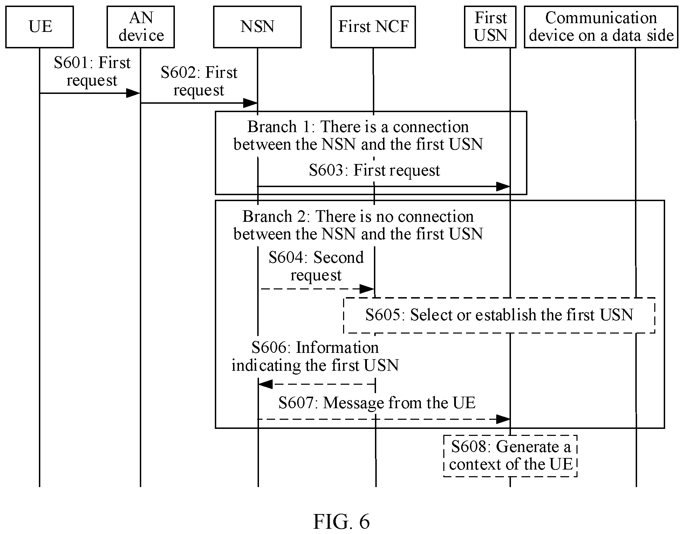

An embodiment of this application further provides a communication method. The method is applicable to the communication system shown in FIG. 1 or FIG. 2. In the method, a terminal device may access a UCN based on a first identifier. The following describes this embodiment of this application with reference to a flowchart shown in FIG. 6. For ease of description, the following uses an example in which a communication device of a core network function that provides a dedicated service for the terminal device is a USN, a communication device of an access function connected to the core network function is an NSN, a communication device of a control function that manages the core network function is an NCF, and the terminal device is UE for description.

S601: The UE sends a first request to an AN device. The first request is used to request to connect the UE to the UCN.

Optionally, the first request is a NAS message. For example, the first request is at least one of the following: a registration request, a service request, a connection establishment request, and the like.

Optionally, the first request includes the first identifier of the UE. For specific content of the first identifier, refer to the method in FIG. 5. Details are not described herein again.

S602: The AN device sends the first request to the NSN.

S602 may include the following implementations.

Manner A: The AN device sends the first request to a first NSN indicated by NSN Info. in the first identifier.

Manner B: The AN device selects an NSN, namely, a second NSN, and sends the first request to the second NSN.

In the manner B, the AN device may randomly select an NSN as the second NSN, or may select a default NSN as the second NSN.

Optionally, the AN device determines, depending on whether the first identifier includes the NSN Info., to perform the manner A or the manner B. Specifically, when the first identifier includes the NSN Info., the AN device may send the first request in the manner A; or when the first identifier does not include the NSN Info., the AN device sends the first request in the manner B.

Optionally, when the AN device finds that the AN device cannot communicate with the NSN indicated by the NSN Info. in the first identifier, the AN device may alternatively send the first request in the manner B.

When there is a connection between the NSN and a first USN indicated by USN Info. in the first identifier, S603 (namely, a branch 1 in FIG. 6) is performed; or when there is no connection between the NSN and a first USN, S604 to S607 (namely, a branch 2 in FIG. 6) are performed.

S603: The NSN sends the first request to the first USN.

S604: The NSN sends a second request to a first NCF indicated by NCF Info. in the first identifier.

The second request may be used to request to query for information about the first USN.

Optionally, the second request is a NAS message. For example, the second request is a USN query request message or the first request.

The second request may include the first identifier.

S605: The first NCF selects or establishes the first USN based on the USN Info. in the first identifier.

Specifically, when the first USN indicated by the USN Info. in the first identifier exists, the first NCF may select the first USN. When the first USN does not exist (for example, the first USN has been deleted), the first NCF may establish a corresponding USN, namely, the first USN, based on subscription information of the UE.

Optionally, after S603 or S605, a subsequent procedure corresponding to the first request is performed. For example, when the first request is the registration request, a subsequent registration procedure may be performed after S603 or S605. For another example, when the first request is the connection establishment request, a subsequent connection establishment procedure may be performed after S603 or S605. For still another example, when the first request is the service request, a subsequent service procedure may be performed after S603 or S605.

Optionally, after S605, the method further includes the following steps.

S606: The first NCF sends, to the NSN, information indicating the first USN.

S607: After the first USN establishes a connection to the NSN, the NSN forwards a message from the UE to the first USN. In this way, the UE may communicate with the first USN via the NSN.

Optionally, after S603 or S605, the method further includes the following steps.

S608: The first USN generates a context of the UE.

Optionally, after generating the context of the UE, the first USN may use the USN info. or the first identifier as a key or an index, and store the context of the UE in a communication device on a data side.

It should be understood that the first USN, the NSN, and the first NCF may be located in one network element, or may be located in a plurality of network elements. When at least two communication devices in the first USN, the NSN, and the first NCF are located in a same network element, interaction between the at least two communication devices may be omitted. For example, when the NSN and the first NCF are located in the same network element, S604 may not be performed, and the second request in S606 and S607 is replaced with the first request. For another example, when the first USN, the NSN, and the first NCF are located in the same network element, only S601 and S602 may be included. In S602, the first USN may receive the first request.

In the method, the UE may access a UCN mobile communication network based on the first identifier.

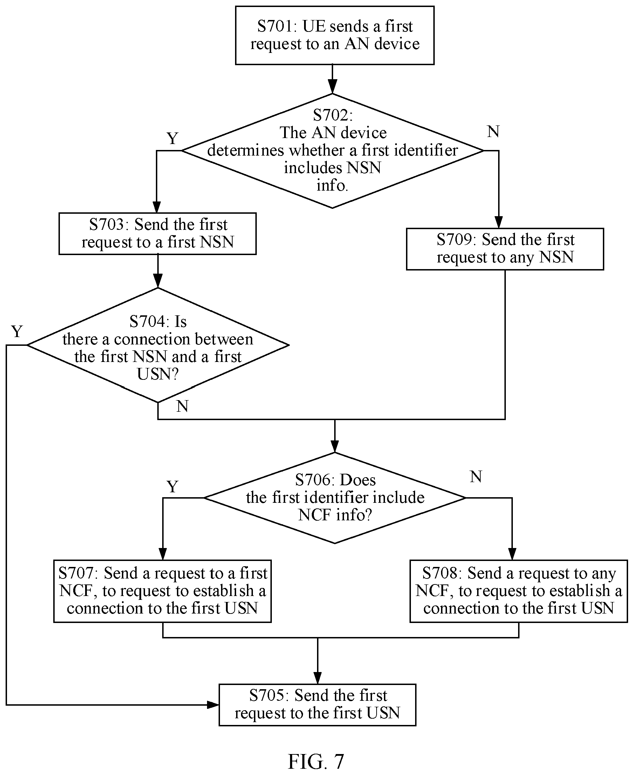

An embodiment of this application further provides a communication method. The method is applicable to the communication system shown in FIG. 1 or FIG. 2. In the method, a terminal device may access a first mobile communication system (for example, a UCN) based on a first identifier. The following describes this embodiment of this application with reference to a flowchart shown in FIG. 7. For ease of description, the following uses an example in which a communication device of a core network function that provides a dedicated service for the terminal device is a USN, a communication device of an access function connected to the core network function is an NSN, a communication device of a control function that manages the core network function is an NCF, and the terminal device is UE for description.

S701: The UE sends a first request to an AN device.

The UE may send the first request to the AN device when accessing the first mobile communication system.

The first request includes the first identifier of the UE.

For specific content of S701, refer to the method shown in FIG. 5. Details are not described herein again.

S702: The AN device determines whether the first identifier includes NSN info.. When a determining result is yes, S703 is performed; or when a determining result is no, S709 is performed.

S703: The AN device sends the first request to a first NSN based on the NSN info., in other words, the AN device sends the first request to the first NSN indicated by the NSN info..

S704: The first NSN determines whether a connection exists between the first NSN and a first USN indicated by USN info. in the first identifier. When a determining result is yes, S705 is performed; or when a determining result is no, S706 is performed.

S705: The first NSN sends the first request to the first USN.

S706: The first NSN determines whether the first identifier includes NCF info.. When a determining result is yes, S707 is performed; or when a determining result is no, S708 is performed.

S707: The first NSN sends a second request to a first NCF based on the NCF info., to request to establish the connection to the first USN. In other words, the first NSN sends the second request to the first NCF indicated by the NCF info..

After the first NSN establishes the connection to the first USN, S705 is performed.

S708: The first NSN sends a second request to any NCF (referred to as a second NCF below for ease of differentiation), to request to establish the connection to the first USN.

The second NCF may establish the connection between the first NSN and the first USN after obtaining information about the first USN from a communication device on a data side.

After the connection to the first USN is established, S705 is performed.

S709: The AN device sends the first request to any NSN (referred to as a second NSN below for ease of differentiation). Then, the second NSN may perform the operations of the first NSN in S706 to S708.

In the method, the UE may access the UCN based on the first identifier.

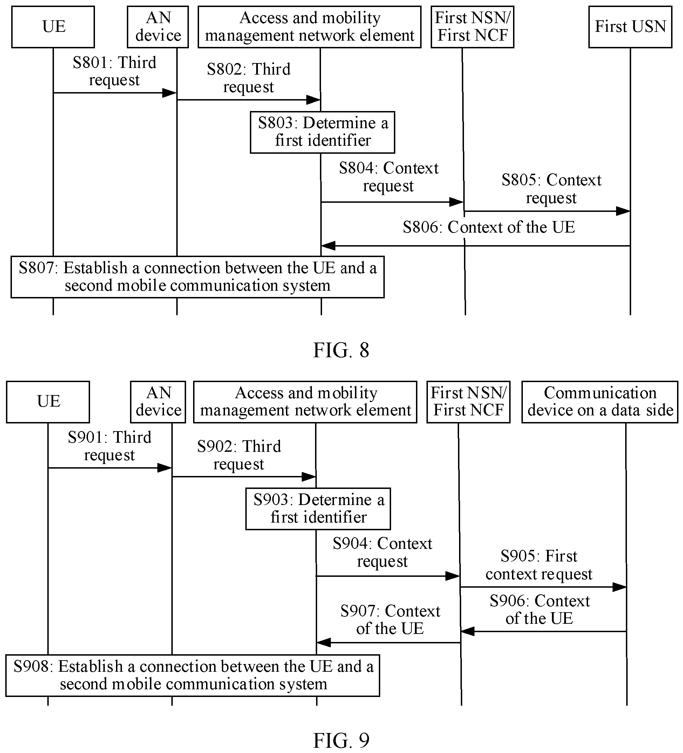

An embodiment of this application further provides a communication method. The method is applicable to the communication system shown in FIG. 1 or FIG. 2. In the method, when a terminal device accesses a second mobile communication system in which an access and mobility management network element is located, the access and mobility management network element may obtain, based on a first identifier of the terminal device, a context of the terminal device from a core network function that provides a dedicated service for the terminal device. The following describes this embodiment of this application with reference to a flowchart shown in FIG. 8. For ease of description, the following uses an example in which a communication device of the core network function that provides the dedicated service for the terminal device is a USN, a communication device of an access function connected to the core network function is an NSN, a communication device of a control function that manages the core network function is an NCF, and the terminal device is UE for description.

S801: The UE sends a third request to an AN device.

The third request is used to request to connect the UE to the second mobile communication system (for example, a 4G mobile communication system or a 5G mobile communication system).

The third request may be a NAS message. For example, the third request is at least one of the following: a registration request, a service request, and a connection establishment request.

Optionally, the third request includes a second identifier of the UE. The second identifier includes information indicating the access and mobility management network element. The access and mobility management network element may be an AMF or an MME. The information indicating the access and mobility management network element may include at least one of the following: an identifier of the access and mobility management network element and an address of the access and mobility management network element.

Before sending the third request, the UE may determine, based on a correspondence between the first identifier and the second identifier, the second identifier corresponding to the first identifier of the UE (that is, map the first identifier to the second identifier). The correspondence may be pre-stored in the UE. For content of the first identifier, refer to the method shown in FIG. 3. Details are not described herein again.

Optionally, the third request further includes indication information indicating the UE to change from accessing a first mobile communication system to accessing the second mobile communication system.

S802: The AN device sends the third request to the access and mobility management network element.

S803: The access and mobility management network element may determine, based on the correspondence between the first identifier and the second identifier, the first identifier corresponding to the second identifier of the UE (that is, reversely map the second identifier to the first identifier).

For specific content of S803, refer to the method shown in FIG. 4. Details are not described herein again.

S804: The access and mobility management network element sends a context request to a first NSN indicated by a second indication in the first identifier or a first NCF indicated by a third indication in the first identifier.

The context request may include the first identifier and the information indicating the access and mobility management network element.

Optionally, after obtaining the second indication that indicates the first NSN and that is from the first identifier or the third indication that indicates the first NCF and that is from the first identifier, the access and mobility management network element obtains an address of the first NSN or the first NCF via a domain name server (Domain Name Server, DNS). Then, the access and mobility management network element may send the context request to the first NSN or the first NCF.

S805: The first NSN or the first NCF sends the context request to a first USN indicated by a first indication in the first identifier.

S806: The first USN sends the context of the UE to the access and mobility management network element.

Optionally, before sending the context of the UE to the access and mobility management network element, the first USN obtains a locally stored context of the UE corresponding to the first identifier, or obtains, a context that is of the UE corresponding to the first identifier and that is from a communication device on a data side.

The first USN may directly send the context of the UE to the access and mobility management network element, or forward the context of the UE to the access and mobility management network element via the first NSN or the first NCF.

S807: The access and mobility management network element establishes a connection between the UE and the second mobile communication system.

In some possible implementations, the first identifier may be determined by a second NSN or a second NCF. The second NSN or the second NCF is a default NSN or a default NCF. In this case, S803 to S805 may be replaced with the following steps.

E1: The access and mobility management network element sends a third context request to the second NSN or the second NCF.

Optionally, the third context request may include the second identifier of the UE and the information indicating the access and mobility management network element. For specific content of information included in the third context request, refer to the method shown in FIG. 4. Details are not described herein again.

E2: The second NSN or the second NCF may determine, based on the correspondence between the first identifier and the second identifier, the first identifier corresponding to the second identifier of the UE (that is, reversely map the second identifier to the first identifier).

For specific content of E2, refer to the method shown in FIG. 4. Details are not described herein again.

E3: The second NSN or the second NCF sends a second context request to a first USN.

The second context request includes the first identifier of the UE and the information indicating the access and mobility management network element. For specific content of information included in the second context request, refer to the method shown in FIG. 4. Details are not described herein again.

In some possible implementations, the first USN in the foregoing method may be replaced with the communication device on the data side.

In the method, when the UE accesses the second mobile communication system in which the access and mobility management network element is located, the access and mobility management network element may obtain the context of the UE from the first USN based on the first identifier of the UE, to better serve the UE.

An embodiment of this application further provides a communication method. The method is applicable to the communication system shown in FIG. 1 or FIG. 2. In the method, when a terminal device accesses a second mobile communication system in which an access and mobility management network element is located, the access and mobility management network element may obtain a context of the terminal device from a communication device on a data side based on a first identifier of the terminal device. The following describes this embodiment of this application with reference to a flowchart shown in FIG. 9. For ease of description, the following uses an example in which a communication device of a core network function that provides a dedicated service for the terminal device is a USN, a communication device of an access function connected to the core network function is an NSN, a communication device of a control function that manages the core network function is an NCF, and the terminal device is UE for description.

S901: The UE sends a third request to an AN device.

S902: The AN device sends the third request to the access and mobility management network element.

S903: The access and mobility management network element may determine, based on a correspondence between the first identifier and a second identifier, the first identifier corresponding to the second identifier of the UE (that is, reversely map the second identifier to the first identifier).

S904: The access and mobility management network element sends a context request to a first NSN indicated by a second indication in the first identifier or a first NCF indicated by a third indication in the first identifier.

For specific content of S901 to S904, refer to S801 to S804. Details are not described herein again.

S905: The first NSN or the first NCF sends a first context request to the communication device on the data side.

Optionally, the first context request includes the first identifier.

S906: The communication device on the data side sends the context of the UE to the first NSN or the first NCF.

S907: The first NSN or the first NCF sends the context of the UE to the access and mobility management network element.

S908: The access and mobility management network element establishes a connection between the UE and the second mobile communication system.

In some possible implementations, the first identifier may be determined by a second NSN or a second NCF. The second NSN or the second NCF is a default NSN or a default NCF. In this case, S903 to S907 may be replaced with the following steps.

F 1: The access and mobility management network element sends a third UE context request to the second NSN or the second NCF.

Optionally, the third UE context request may include a second identifier of the UE and information indicating the access and mobility management network element. For specific content of information included in the third UE context request, refer to the method shown in FIG. 4. Details are not described herein again.

F2: The second NSN or the second NCF may determine, based on a correspondence between the first identifier and the second identifier, the first identifier corresponding to the second identifier of the UE (that is, reversely map the second identifier to the first identifier).

For specific content of F2, refer to the method shown in FIG. 4. Details are not described herein again.

F3: The second NSN or the second NCF sends a first UE context request to the communication device on the data side.

The first UE context request includes the first identifier of the UE.

F4: The communication device on the data side sends the context of the UE to the second NSN or the second NCF.

F5: The second NSN or the second NCF sends the context of the UE to the access and mobility management network element.

In some possible implementations, the communication device on the data side in the foregoing method may be replaced with a first USN.

In the method, when the UE accesses the second mobile communication system in which the access and mobility management network element is located, the access and mobility management network element may obtain the context of the UE from the communication device on the data side based on the first identifier of the UE, to better serve the UE.

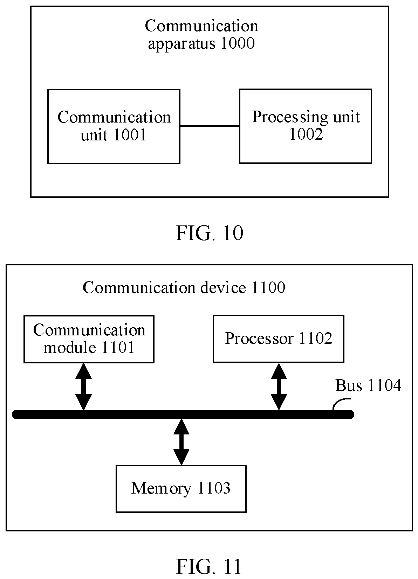

Based on a same technical concept, this application further provides a communication apparatus. A structure of the apparatus is shown in FIG. 10, and includes a communication unit 1001 and a processing unit 1002. The communication apparatus 1000 may be used in the terminal device, the communication device (for example, the USN or the communication device on the data side) of the core network function, the NCF, or the NSN that is in the communication system shown in FIG. 1 or FIG. 2, and may implement the communication method provided in the foregoing embodiments and instances of this application. Functions of units in the apparatus 1000 are described below.

The communication unit 1001 is configured to receive and send data.

When the communication apparatus 1000 is used in the communication device (for example, the USN) of the core network function, the NCF, or the NSN, the communication unit 1001 may be implemented through a physical interface, a communication module, a communication interface, or an input/output interface. The communication apparatus 1000 may be connected to a network cable or a cable via the communication unit, to establish a physical connection to another device.

When the communication apparatus 1000 is used in the terminal device, the communication unit 1001 may be implemented via a transceiver, for example, a mobile communication module.

The mobile communication module may provide a solution that is applied to the terminal device and that includes wireless communication such as 2G, 3G, 4G, and 5G. The mobile communication module may include at least one antenna, at least one filter, a switch, a power amplifier, a low noise amplifier (low noise amplifier, LNA), and the like. The terminal device may access an AN device in an AN via the mobile communication module, and interact with the AN device. Alternatively, the AN device may communicate with the accessed terminal device via the mobile communication module.

In an implementation, the communication apparatus 1000 is used in the terminal device (for example, the terminal device in FIG. 3 or the UE in FIG. 5 to FIG. 9) in the embodiment of this application shown in any one of FIG. 3 and FIG. 5 to FIG. 9. The following describes specific functions of the processing unit 1002 in this implementation.

The processing unit 1002 is configured to: obtain a first identifier of the terminal device, where the first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function; and communicate with the first core network function based on the first identifier via the communication unit 1001.

Optionally, the processing unit 1002 is specifically configured to communicate, via the communication unit 1001 and via the first access function indicated by the second indication and/or the first control function indicated by the third indication, with the first core network function indicated by the first indication.

Optionally, the processing unit 1002 is specifically configured to: after communicating with the first core network function based on the first identifier, determine, based on a stored correspondence between the first identifier and a second identifier of the terminal device, the second identifier corresponding to the first identifier, where the second identifier includes information indicating an access and mobility management network element; and communicate with the access and mobility management network element based on the second identifier via the communication unit 1001.

Optionally, the processing unit 1002 is specifically configured to: obtain a second identifier of the terminal device, where the second identifier is an identifier allocated by an access and mobility management network element to the terminal device, and includes information indicating the access and mobility management network element; and determine, based on a stored correspondence between the first identifier and the second identifier, the first identifier corresponding to the second identifier.

Optionally, the processing unit 1002 is specifically configured to receive the first identifier from a second core network function via the communication unit 1001.

Optionally, the first identifier further includes a fourth indication, and the fourth indication indicates an identifier of the terminal device in the first core network function.

In an implementation, the communication apparatus 1000 is used in the second core network function (for example, the second core network function in the embodiment of this application shown in FIG. 3 or FIG. 4, the first USN or the communication device on the data side in the embodiment of this application shown in FIG. 5, or the first USN or the communication device on the data side in the embodiment of this application shown in FIG. 8 or FIG. 9) in the embodiments of this application shown in FIG. 3 to FIG. 5, FIG. 8, or FIG. 9. The following describes specific functions of the processing unit 1002 in this implementation.

The processing unit 1002 is configured to: generate a first identifier of a terminal device, where the first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function; and communicate with the terminal device based on the first identifier via the communication unit 1001.

Optionally, the processing unit 1002 is specifically configured to: before generating the first identifier of the terminal device, obtain at least one of the first indication, the second indication, and the third indication via the communication unit 1001.

Optionally, the processing unit 1002 is specifically configured to obtain the at least one of the first indication, the second indication, and the third indication from the first access function or the first control function via the communication unit 1001.

Optionally, the processing unit 1002 is specifically configured to:
after generating the first identifier of the terminal device, store a context of the terminal device corresponding to the first identifier; and
after receiving, via the communication unit 1001, a first context request that carries the first identifier and that is from a first communication device, send, to the first communication device via the communication unit 1001, the context of the terminal device corresponding to the first identifier, where the first communication device is one of the following devices: the first access function, the first control function, a second access function, or a second control function, the second access function is a preset access function, and the second control function is a preset control function.

Optionally, the processing unit 1002 is specifically configured to:
after generating the first identifier of the terminal device, store a context of the terminal device corresponding to the first identifier; and
after receiving, via the communication unit 1001, a second context request that carries the first identifier and indicates an access and mobility management network element and that is from a first communication device, send, to the access and mobility management network element via the communication unit 1001, the context of the terminal device corresponding to the first identifier, where the first communication device is one of the following devices: the first access function, the first control function, a second access function, or a second control function, the second access function is a preset access function, and the second control function is a preset control function.

Optionally, the first identifier further includes a fourth indication, and the fourth indication indicates an identifier of the terminal device in the first core network function.

In an implementation, the communication apparatus 1000 is used in the first communication device (for example, the first communication device in the embodiment of this application shown in FIG. 4, the first NSN or the first NCF in the embodiment of this application shown in FIG. 5, the first NSN, the first NCF, or the second NSN in the embodiment of this application shown in FIG. 6, or the first NSN, the first NCF, the second NSN, or the second NCF in the embodiment of this application shown in any one of FIG. 7 to FIG. 9) in the embodiment of this application shown in any one of FIG. 4 to FIG. 9. The following describes specific functions of the processing unit 1002 in this implementation.

The processing unit 1002 is configured to:
obtain a first identifier of a terminal device, where the first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function; and
provide a service for the terminal device based on the first identifier, where
the first communication device is one of the following devices: the first access function, the first control function, a second access function, or a second control function, the second access function is a preset access function, and the second control function is a preset control function.

Optionally, the processing unit 1002 is specifically configured to:
obtain the first identifier of the terminal device from a first message from a second communication device, where the second communication device is one of the following devices: the terminal device, an access network AN device accessed by the terminal device, or an access and mobility management network element; and
send the first message to the first core network function via the communication unit 1001.

Optionally, the processing unit 1002 is specifically configured to:
obtain the first identifier of the terminal device from the first message from the second communication device, where the second communication device is one of the following devices: the terminal device, the access network AN device accessed by the terminal device, or the access and mobility management network element;
obtain, from a data management function or a data storage function via the communication unit 1001, information indicating a third core network function that provides a dedicated service for the terminal device; and
send the first message to the third core network function via the communication unit 1001.

Optionally, the processing unit 1002 is specifically configured to:
obtain the first identifier of the terminal device from the first message from the second communication device, where the second communication device is one of the following devices: the terminal device, the access network AN device accessed by the terminal device, or the access and mobility management network element;
obtain subscription information of the terminal device from the data management function or the data storage function via the communication unit 1001;
select or establish, based on the subscription information, a fourth core network function that provides a dedicated service for the terminal device; and
send the first message to the fourth core network function via the communication unit 1001.

Optionally, the processing unit 1002 is specifically configured to:
obtain the first identifier based on a third context request from the access and mobility management network element; and
obtain, from a second core network function via the communication unit 1001, a context of the terminal device corresponding to the first identifier, and send the context of the terminal device to the access and mobility management network element via the communication unit 1001; and/or send a second context request to the second core network function via the communication unit 1001, where the second context request includes the first identifier and information indicating the access and mobility management network element, and the second context request is used to trigger the second core network function to send, to the access and mobility management network element, the context of the terminal device corresponding to the first identifier.

Optionally, the processing unit 1002 is specifically configured to:
when the third context request includes the first identifier, obtain the first identifier from the third context request; and/or
when the third context request includes a second identifier of the terminal device, determine, based on the second identifier and a stored correspondence between the first identifier and the second identifier, the first identifier corresponding to the second identifier, where the second identifier is an identifier allocated by the access and mobility management network element to the terminal device.

Optionally, the first identifier further includes a fourth indication, and the fourth indication indicates an identifier of the terminal device in the first core network function.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, this application further provides a communication device. The communication device may be used in the terminal device, the communication device (for example, the USN or the communication device on the data side) of the core network function, the NCF, or the NSN that is in the communication system shown in FIG. 1; may implement the communication method provided in the foregoing embodiments and instances of this application; and has a function of the communication apparatus shown in FIG. 10. As shown in FIG. 11, the communication device 1100 includes a communication module 1101, a processor 1102, and a memory 1103. The communication module 1101, the processor 1102, and the memory 1103 are connected to each other.

Optionally, the communication module 1101, the processor 1102, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 11, but this does not mean that there is only one bus or only one type of bus.

The communication module 1101 is configured to receive and send data, to implement communication and interaction with another device. For example, when the communication device 1100 is used in the communication device (for example, the USN or the communication device on the data side) of the core network function, the NCF, or the NSN, the communication module 1101 may be implemented through a physical interface, a communication module, a communication interface, or an input/output interface. For another example, when the communication device 1100 is used in the terminal device, the communication module 1101 may alternatively be implemented via a transceiver.

In an implementation, the communication device 1100 is used in the terminal device (for example, the terminal device in FIG. 3 or the UE in FIG. 5 to FIG. 9) in the embodiment of this application shown in any one of FIG. 3 and FIG. 5 to FIG. 9. The processor 1102 is specifically configured to:
obtain a first identifier of the terminal device, where the first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function; and communicate with the first core network function based on the first identifier via the communication module 1101.

In an implementation, the communication device 1100 is used in the second core network function (for example, the second core network function in the embodiment of this application shown in FIG. 3 or FIG. 4, the first USN or the communication device on the data side in the embodiment of this application shown in FIG. 5, or the first USN or the communication device on the data side in the embodiment of this application shown in FIG. 8 or FIG. 9) in the embodiments of this application shown in FIG. 3 to FIG. 5, FIG. 8, or FIG. 9. The processor 1102 is specifically configured to:
generate a first identifier of a terminal device, where the first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function; and communicate with the terminal device based on the first identifier via the communication module 1101.

In an implementation, the communication device 1100 is used in the first communication device (for example, the first communication device in the embodiment of this application shown in FIG. 4, the first NSN or the first NCF in the embodiment of this application shown in FIG. 5, the first NSN, the first NCF, or the second NSN in the embodiment of this application shown in FIG. 6, or the first NSN, the first NCF, the second NSN, or the second NCF in the embodiment of this application shown in any one of FIG. 7 to FIG. 9) in the embodiment of this application shown in any one of FIG. 4 to FIG. 9. The processor 1102 is specifically configured to:
obtain a first identifier of a terminal device, where the first identifier includes a first indication, and a second indication and/or a third indication, the first indication indicates a first core network function that provides a dedicated service for the terminal device, the second indication indicates a first access function connected to the first core network function, and the third indication indicates a first control function that manages the first core network function; and provide a service for the terminal device based on the first identifier.

For a specific function of the processor 1102, refer to the descriptions in the communication method provided in the foregoing embodiments and instances of this application, and the specific function descriptions of the communication apparatus 1000 in the embodiment of this application shown in FIG. 10. Details are not described herein again.

The memory 1103 is configured to store program instructions, data, and the like. Specifically, the program instructions may include program code, and the program code includes computer operation instructions. The memory 1103 may include a random access memory (random access memory, RAM), or may further include a non-volatile memory (non-volatile memory), such as at least one magnetic disk memory. The processor 1102 executes the program instructions stored in the memory 1103, and implements the foregoing function based on the data stored in the memory 1103, to implement the communication methods provided in the foregoing embodiments of this application.

It may be understood that the memory 1103 in FIG. 11 of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example rather than limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

According to the foregoing embodiments, an embodiment of this application further provides a computer program. When the computer program is run on a computer, the computer is enabled to perform the communication method provided in the foregoing embodiments.

According to the foregoing embodiments, an embodiment of this application further provides a computer-readable storage medium. The computer-readable storage medium stores a computer program; and when the computer program is executed by a computer, the computer is enabled to perform the communication method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, magnetic disk storage medium or another magnetic storage device, or any other medium that can carry or store expected program code in a form of an instruction or a data structure and can be accessed by a computer.

According to the foregoing embodiments, an embodiment of this application further provides a chip. The chip is configured to read a computer program stored in a memory, to implement the communication method provided in the foregoing embodiments.

According to the foregoing embodiments, an embodiment of this application provides a chip system. The chip system includes a processor, configured to support a computer apparatus in implementing functions of a service device, a forwarding device, or a station device according to the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method, apparatus, and device. In the method, after obtaining a first identifier of a terminal device, the terminal device may communicate, based on the first identifier, with a first core network function indicated by the first identifier. The first identifier includes a first indication, and a second indication and/or a third indication, the first indication indicates the first core network function that provides a dedicated service for the terminal device, the second indication indicates a first access function connected to the first core network function, and the third indication indicates a first control function that manages the first core network function. In this way, the terminal device may communicate, based on the first identifier, with the first core network function that provides the dedicated service for the terminal device.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of a hardware only embodiment, a software only embodiment, or an embodiment with a combination of software and hardware. In addition, this application may use a form of a computer program product that is implemented on one or more computer-usable storage media (including but not limited to a magnetic disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, applied to a terminal device, wherein the method comprises:
obtaining a first identifier of the terminal device, wherein the first identifier comprises a first indication, and a second indication and/or a third indication, the first indication indicates a first core network function that provides a dedicated service for the terminal device, the second indication indicates a first access function connected to the first core network function, and the third indication indicates a first control function that manages the first core network function; and
communicating with the first core network function based on the first identifier.

2. The method according to claim 1, wherein the communicating with the first core network function based on the first identifier comprises:
communicating, via the first access function indicated by the second indication and/or the first control function indicated by the third indication, with the first core network function indicated by the first indication.

3. The method according to claim 1 or 2, wherein after the communicating with the first core network function based on the first identifier, the method further comprises:
determining, based on a stored correspondence between the first identifier and a second identifier of the terminal device, the second identifier corresponding to the first identifier, wherein the second identifier comprises information indicating an access and mobility management network element; and
communicating with the access and mobility management network element based on the second identifier.

4. The method according to claim 1 or 2, wherein the obtaining a first identifier of the terminal device comprises:
obtaining a second identifier of the terminal device, wherein the second identifier is an identifier allocated by an access and mobility management network element to the terminal device, and comprises information indicating the access and mobility management network element; and
determining, based on a stored correspondence between the first identifier and the second identifier, the first identifier corresponding to the second identifier.

5. The method according to any one of claims 1 to 3, wherein the obtaining a first identifier of the terminal device comprises:
receiving the first identifier from a second core network function.

6. The method according to any one of claims 1 to 5, wherein the first identifier further comprises a fourth indication, and the fourth indication indicates an identifier of the terminal device in the first core network function.

7. A communication method, applied to a second core network function, wherein the method comprises:
generating a first identifier of a terminal device, wherein the first identifier comprises a first indication, and a second indication and/or a third indication, the first indication indicates a first core network function that provides a dedicated service for the terminal device, the second indication indicates a first access function connected to the first core network function, and the third indication indicates a first control function that manages the first core network function; and
communicating with the terminal device based on the first identifier.

8. The method according to claim 7, wherein before the generating a first identifier of a terminal device, the method further comprises:
obtaining at least one of the first indication, the second indication, and the third indication.

9. The method according to claim 8, wherein the obtaining at least one of the first indication, the second indication, and the third indication comprises:
obtaining the at least one of the first indication, the second indication, and the third indication from the first access function or the first control function.

10. The method according to any one of claims 7 to 9, wherein after the generating a first identifier of a terminal device, the method further comprises:
storing a context of the terminal device corresponding to the first identifier; and
after receiving a first context request that carries the first identifier and that is from a first communication device, sending, to the first communication device, the context of the terminal device corresponding to the first identifier, wherein the first communication device is one of the following devices: the first access function, the first control function, a second access function, or a second control function, the second access function is a preset access function, and the second control function is a preset control function.

11. The method according to any one of claims 7 to 9, wherein after the generating a first identifier of a terminal device, the method further comprises:
storing a context of the terminal device corresponding to the first identifier; and
after receiving a second context request that carries the first identifier and indicates an access and mobility management network element and that is from a first communication device, sending, to the access and mobility management network element, the context of the terminal device corresponding to the first identifier, wherein the first communication device is one of the following devices: the first access function, the first control function, a second access function, or a second control function, the second access function is a preset access function, and the second control function is a preset control function.

12. The method according to any one of claims 7 to 11, wherein the first identifier further comprises a fourth indication, and the fourth indication indicates an identifier of the terminal device in the first core network function.

13. A communication method, applied to a first communication device, wherein the method comprises:
obtaining a first identifier of a terminal device, wherein the first identifier comprises a first indication, and a second indication and/or a third indication, the first indication indicates a first core network function that provides a dedicated service for the terminal device, the second indication indicates a first access function connected to the first core network function, and the third indication indicates a first control function that manages the first core network function; and
providing a service for the terminal device based on the first identifier, wherein
the first communication device is one of the following devices: the first access function, the first control function, a second access function, or a second control function, the second access function is a preset access function, and the second control function is a preset control function.

14. The method according to claim 13, wherein
the obtaining a first identifier of a terminal device comprises: obtaining the first identifier of the terminal device from a first message from a second communication device, wherein the second communication device is one of the following devices: the terminal device, an access network AN device accessed by the terminal device, or an access and mobility management network element; and
the providing a service for the terminal device based on the first identifier comprises: sending the first message to the first core network function.

15. The method according to claim 13 or 14, wherein
the obtaining a first identifier of a terminal device comprises: obtaining the first identifier of the terminal device from the first message from the second communication device, wherein the second communication device is one of the following devices: the terminal device, the access network AN device accessed by the terminal device, or the access and mobility management network element; and
the providing a service for the terminal device based on the first identifier comprises:
obtaining, from a data management function or a data storage function, information indicating a third core network function that provides a dedicated service for the terminal device; and
sending the first message to the third core network function.

16. The method according to any one of claims 13 to 15, wherein
the obtaining a first identifier of a terminal device comprises: obtaining the first identifier of the terminal device from the first message from the second communication device, wherein the second communication device is one of the following devices: the terminal device, the access network AN device accessed by the terminal device, or the access and mobility management network element; and
the providing a service for the terminal device based on the first identifier comprises:
obtaining subscription information of the terminal device from the data management function or the data storage function;
selecting or establishing, based on the subscription information, a fourth core network function that provides a dedicated service for the terminal device; and
sending the first message to the fourth core network function.

17. The method according to any one of claims 13 to 16, wherein
the obtaining a first identifier of a terminal device comprises: obtaining the first identifier based on a third context request from the access and mobility management network element; and
the providing a service for the terminal device based on the first identifier comprises:
obtaining, from a second core network function, a context of the terminal device corresponding to the first identifier, and sending the context of the terminal device to the access and mobility management network element; and/or
sending a second context request to the second core network function, wherein the second context request comprises the first identifier and information indicating the access and mobility management network element, and the second context request is used to trigger the second core network function to send, to the access and mobility management network element, the context of the terminal device corresponding to the first identifier.

18. The method according to claim 17, wherein the obtaining the first identifier based on a third context request from the access and mobility management network element comprises at least one of the following:
when the third context request comprises the first identifier, obtaining the first identifier from the third context request; and
when the third context request comprises a second identifier of the terminal device, determining, based on the second identifier and a stored correspondence between the first identifier and the second identifier, the first identifier corresponding to the second identifier, wherein the second identifier is an identifier allocated by the access and mobility management network element to the terminal device.

19. The method according to any one of claims 13 to 18, wherein the first identifier further comprises a fourth indication, and the fourth indication indicates an identifier of the terminal device in the first core network function.

20. A communication apparatus, comprising:
a communication unit, configured to receive and send data; and
a processing unit, configured to perform, via the communication unit, the method according to any one of claims 1 to 19.

21. A communication system, comprising:
a terminal device, configured to implement the method according to any one of claims 1 to 6;
a second core network function, configured to implement the method according to any one of claims 7 to 12; and
a first communication device, configured to implement the method according to any one of claims 13 to 19.

22. A computer-readable storage medium, wherein the computer-readable storage medium stores a computer program; and when the computer program is run on a computer, the computer is enabled to perform the method according to any one of claims 1 to 19.

23. A chip, wherein the chip is coupled to a memory; and the chip reads a computer program stored in the memory, to perform the method according to any one of claims 1 to 19.

24. A communication apparatus, comprising a unit configured to perform the method according to any one of claims 1 to 19.

25. A communication device, comprising at least one processing element and at least one storage element, wherein the at least one storage element is configured to store a program and data, and the at least one processing element is configured to read and execute the program and the data that are stored in the storage element, to implement the method according to any one of claims 1 to 19.

26. A computer program, wherein when the computer program is run on a computer, the method according to any one of claims 1 to 19 is implemented.

27. A chip system, wherein the chip system comprises a processor, configured to support a computer apparatus in implementing the method according to any one of claims 1 to 19.
